# EUROPEAN PATENT SPECIFICATION

(11) **EP 4 265 706 B1**
(45) Date of publication and mention of the grant of the patent: **11.06.2025**
(21) Application number: 21907082.8
(22) Date of filing: 15.12.2021
(51) Int. Cl.: C10K 1/00, C10K 1/08, C10B 33/00, C02F 1/72, C01C 1/02

(54) **METHOD FOR SIMULTANEOUSLY REMOVING HYDROGEN SULFIDE (H2S) AND HYDROGEN CYANIDE (HCN) FROM CONCENTRATED AMMONIA LIQUOR**
VERFAHREN ZUR GLEICHZEITIGEN ENTFERNUNG VON SCHWEFELWASSERSTOFF (H2S) UND CYANWASSERSTOFF (HCN) AUS KONZENTRIERTER AMMONIAKFLÜSSIGKEIT
PROCÉDÉ D'ÉLIMINATION SIMULTANÉE DE SULFURE D'HYDROGÈNE (H2S) ET DE CYANURE D'HYDROGÈNE (HCN) À PARTIR DE LIQUEUR AMMONIACALE CONCENTRÉE

(30) Priority: 15.12.2020 KR 20200175192
(43) Date of publication of application: 25.10.2023
(73) Proprietor: RESEARCH INSTITUTE OF INDUSTRIAL SCIENCE & TECHNOLOGY, Pohang-si, Gyeongsangbuk-do 37673 (KR)
(72) Inventor: SHIN, Dong-Nam, Pohang-si, Gyeongsangbuk-do 37837 (KR); YANG, Hee-Jeong, Pohang-si, Gyeongsangbuk-do 37656 (KR)
(74) Representative: Kador & Partner Part mbB
(86) International application number: PCT/KR2021/019042
(87) International publication number: WO 2022/131778

(56) References cited:
- WO-A1-2005/056164
- JP-B2- H0 249 768
- KR-A- 20090 067 856
- KR-A- 20140 031 535
- KR-B1- 100 510 831

## Description

### Technical Field

The present disclosure relates to a method for removing hydrogen sulfide (H₂S) and hydrogen cyanide (HCN) contained in concentrated ammonia liquor used in an H₂S scrubber (H₂S/S) in a chemical by-product plant purifying coke oven gas (COG), and in particular, to a method for removing hydrogen sulfide (H₂S) and hydrogen cyanide (HCN) contained in concentrated ammonia liquor using an iron oxide catalyst.

### Background Art

A coke oven with multiple carbonization chambers charges coal using a charging car and then heats the coal at a temperature of approximately 1240°C or higher while blocking external air for about 19 hours, and produces gray-white coke from which volatile components contained in the coal are removed, which is a kind of coal-drying operation. Furthermore, coke that has been retorted is discharged from the carbonization chamber using an extruder, and is transported to a fire quenching tower and quenched.

Meanwhile, although not illustrated in separate drawings, the COG described above is generated by thermal decomposition during a retorting process of the coal charged in the carbonization chamber, and the COG is transported to a purification facility (e.g., a chemical by-product plant) through a lifting tube provided at an upper portion of each carbonization chamber.

The COG contains acidic gases such as hydrogen sulfide (H₂S) and hydrogen cyanide (HCN), and when the COG is burned, hydrogen sulfide (H₂S) is converted into sulfur dioxide (SO₂), and hydrogen cyanide (HCN) is converted into nitrogen oxide (NOₓ), which may cause ultrafine dust. Thus, before the COG transported to the chemical by-product plant is burned, tar, hydrogen sulfide, and hydrogen cyanide need to be removed through a purification process. However, as environmental regulations are increasingly strengthened, quality improvement of COG is desired. Accordingly, as a method for improving the absorption efficiency of an H₂S scrubber that removes hydrogen sulfide and hydrogen cyanide of the COG in the chemical by-product plant, a method for additionally installing the H₂S scrubber and using sodium hydroxide (NaOH) compounds, ammonia (NH₃) compounds, or amine compounds is used.

Furthermore, Korean Patent No. 10-0467774 discloses a constitution in which ammonia liquor used in an H₂S scrubber is transported to an ammonia regeneration tower to separate and refine hydrogen sulfide from the ammonia liquor, and then the sulfide is recirculated back to the H₂S scrubber.

KR100510831 discloses a process for removing H2S from concentrated ammonia liquor by contacting with iron sulfate and precipitating iron sulfide.

Accordingly, a method for removing hydrogen sulfide (H₂S) and hydrogen cyanide (HCN) contained in concentrated ammonia liquor which is an absorption liquid supplied to an H₂S scrubber in a relatively simple process may be expected to be useful in related fields.

### Summary of Invention

### Technical Problem

An aspect of the present disclosure is to provide a method for removing hydrogen sulfide (H₂S) and hydrogen cyanide (HCN) contained in concentrated ammonia liquor using an iron oxide catalyst.

### Solution to Problem

According to an aspect of the present disclosure, a method for removing hydrogen sulfide (H₂S) and hydrogen cyanide (HCN) contained in concentrated ammonia liquor includes: a catalyst treatment step of bringing concentrated ammonia liquor containing hydrogen sulfide (H₂S) and hydrogen cyanide (HCN) into contact with an iron oxide catalyst; and a regeneration step of regenerating the iron oxide catalyst by supplying a regeneration liquid to the iron oxide catalyst.

### Advantageous Effects of Invention

According to an aspect of the present disclosure, by simultaneously removing hydrogen sulfide (H₂S) and hydrogen cyanide (HCN) contained in concentrated ammonia liquor, the absorption efficiency of hydrogen sulfide (H₂S) and hydrogen cyanide (HCN) of coke oven gas (COG) may be improved when the concentrated ammonia liquor is used in an H₂S scrubber (H2S/S).

### Brief Description of Drawings

FIG. 1 is a brief schematic diagram illustrating an exemplary treatment device configured to perform a method for removing hydrogen sulfide (H₂S) and hydrogen cyanide (HCN) from the concentrated ammonia liquor of the present disclosure.
FIG. 2 is a view illustrating concentrations of hydrogen sulfide and hydrogen cyanide contained in concentrated ammonia liquor before and after removing hydrogen sulfide and hydrogen cyanide from the concentrated ammonia liquor using an iron oxide catalyst of the present disclosure.
FIG. 3 is a view illustrating a change in hydrogen sulfide concentration of a recovered concentrated ammonia liquor when a regenerated catalyst and a new catalyst of the present disclosure are used, from which it may be confirmed that the catalyst may be used semipermanently by regenerating the catalyst.

### Best Mode for Invention

Hereinafter, a preferred embodiment of the present disclosure will be described. However, embodiments of the present disclosure may be modified in several different forms, and the scope of the present disclosure is not limited to the embodiments described below.

The present disclosure which targets concentrated ammonia liquor used in an H₂S scrubber (H₂S/S) in a process of treating COG generated in a coke oven, relates to a method for reducing a concentration of the concentrated ammonia liquor by removing hydrogen sulfide (H₂S) and hydrogen cyanide (HCN) dissolved in the concentrated ammonia liquor. In the present disclosure, concentrated ammonia liquor refers to an absorbent solution supplied to the H₂S scrubber (H₂S/S) to absorb hydrogen sulfide and hydrogen cyanide contained in the COG, and generally, it is an aqueous solution including NH₃, H₂S, CO₂, HCN, and BTX (i.e., benzene, toluene and xylene), and has a pH of 9.5 to 10.5.

More specifically, the method therefor includes a catalyst treatment step of bringing concentrated ammonia liquor containing hydrogen sulfide (H₂S) and hydrogen cyanide (HCN) into contact with an iron oxide catalyst; and a regeneration step of regenerating the iron oxide catalyst by supplying a regeneration liquid to the iron oxide catalyst.

The concentrated ammonia liquor used for purification of the COG is used to absorb hydrogen sulfide and hydrogen cyanide contained in the COG. Thus, absorption efficiency of hydrogen sulfide and hydrogen cyanide from the COG may be improved using the concentrated ammonia liquor of which the concentration is reduced by removing hydrogen sulfide and hydrogen cyanide, in the H₂S scrubber (H₂S/S).

Hydrogen sulfide and hydrogen cyanide may be removed from the concentrated ammonia liquor through the catalyst treatment step of brining the concentrated ammonia liquor in contact with the iron oxide catalyst. Iron oxide that may be used at this time may be selected from the group consisting of iron oxide (FeO), triiron tetraoxide (Fe₃O₄), hematite (Fe₂O₃) and iron hydroxide (Fe(OH)₂, Fe(OH)₃), and, preferably, the hematite (Fe₂O₃) and the iron hydroxide (Fe(OH)₃) may be used.

The contact step is not particularly limited, but may be performed by, for example, spraying the concentrated ammonia liquor to an iron oxide catalyst or immersing the iron oxide catalyst in the concentrated ammonia liquor, but a contact method thereof is not particularly limited. For example, when the concentrated ammonia liquor is sprayed, the concentrated ammonia liquor and the iron oxide catalysts may be effectively brought into contact with each other, thereby increasing the efficiency of removing hydrogen sulfide and hydrogen cyanide from the concentrated ammonia liquor.

A particulate phase may be used as the iron oxide catalyst. Specifically, since the catalyst may be mixed with solid sulfur generated in the catalyst treatment step, the particulate phase other than powder may be used to separate the solid sulfur in the regeneration step and easily regenerate the catalyst. Particles with an average particle diameter of, preferably, 2 to 10mm may be used, and particles with an average particle diameter of, most preferably, 3 to 8mm may be used, but the particles are not limited thereto and may be used without limitation as long as they have a size that may be easily separated from the solid sulfur in the regeneration step and be easy to regenerate the catalyst.

Meanwhile, the catalyst treatment step may be performed by supplying air, oxygen, or combinations thereof to the iron oxide catalyst. The air, oxygen, or combinations thereof may be supplied to the iron oxide catalyst in the same direction as a flow direction of the concentrated ammonia liquor when the concentrated ammonia liquor and the iron oxide catalyst come into contact with each other, and an activity of the iron oxide catalyst may be restored when the activity thereof is reduced by removing hydrogen sulfide and hydrogen cyanide contained in the concentrated ammonia liquor. For example, when the concentrated ammonia liquor is sprayed on the iron oxide catalyst, air may be supplied in the same direction as an injection direction of the concentrated ammonia liquor, and in this case, oxygen in the air may restore the activity of the iron oxide catalyst, and may be supplied in an appropriate amount depending on an amount of concentrated ammonia liquor to be treated, the concentrations of hydrogen sulfide and hydrogen cyanide contained in the concentrated ammonia liquor.

For example, when the air, oxygen, or combinations thereof is supplied to the iron oxide catalyst with a regeneration liquid during the catalyst treatment step, the following reaction occurs.

3H₂S + Fe₂O₃ → Fe₂S₃ + 3H₂O

3H₂S + 2Fe(OH)₃ → Fe₂S₃ + 6H₂O

2Fe₂S₃ + 3O₂ → 2Fe₂O₃ + 3S₂

S₂ + CN⁻ → 2SCN⁻

SCN⁻ + 2O₂ + 2H₂O → SO₄²⁻ + CO₂ + NH₄⁺

4S₂ → S₈

That is, the solid sulfur of S₂ to S₈ produced when hydrogen sulfide (H₂S) comes into contact with the iron oxide catalyst and reacts therewith serves to remove hydrogen cyanide (HCN) by reacting with the hydrogen cyanide (HCN). Thus, hydrogen sulfide and hydrogen cyanide may be removed together.

Then, carbon dioxide generated during the reaction process is released in the form of a gas, and ammonium ions and sulfate ions are present as ions in the concentrated ammonia liquor.

The iron oxide catalyst is used in an amount of, preferably, 10 to 30g based on 1 L of the concentrated ammonia liquor, and in an amount of, more preferably, 15 to 25g. When a weight of the iron oxide catalyst is less than 10g, the removal efficiency may be reduced due to an insufficient effect of the catalyst, and when the weight thereof exceeds 30g, an additional increase effect of the removal efficiency may be insignificant, which may be uneconomical.

In the present disclosure, the concentration of hydrogen sulfide contained in the concentrated ammonia liquor may be reduced to 80% to 90% and the concentration of hydrogen cyanide may be reduced to 60% to 70% through the catalyst treatment step of bringing the concentrated ammonia liquor into contact with the iron oxide catalyst.

Meanwhile, the present disclosure includes a regeneration step in which the concentrated ammonia liquor is brought into contact with the iron oxide catalyst and then a catalyst is regenerated by supplying a regeneration liquid to the iron oxide catalyst.

The regeneration step may be performed using an oxidative regeneration liquid, and in this case, the following reaction may occur.

2Fe₂S₃ + 6H₂O₂ → 2Fe₂O₃ + 6H₂O + 3S₂

2Fe₂S₃ + 6H₂O₂ → 4Fe(OH)₃ + 3S₂

2Fe₂S₃ + 6ClO⁻ → 2Fe₂O₃ + 6Cl⁻ + 3S₂

2Fe₂S₃ + 3ClO₂⁻ → 2Fe₂O₃ + 3Cl⁻ + 3S₂

Furthermore, the regeneration liquid may serve to wash away solid sulfur generated on a catalyst surface.

The regeneration liquid may be at least one oxidation regeneration liquid selected from the group consisting of water, ozone water, chlorine dioxide water, H₂O₂, NaOCl, NaClO₂, NaClO₃, NaClO₄, KMnO₄, and HNO₃.

In the regeneration step, at least one oxidizing gas selected from the group consisting of air, oxygen, ozone, and ClO₂ gases may be supplied to the iron oxide catalyst together with the regeneration liquid, and preferably, oxygen may be supplied.

2Fe₂S₃ + 3O₂ → 2Fe₂O₃ + 3S₂

2Fe₂S₃ + 3O₂ + 6H₂O → 4Fe(OH)₃ + 3S₂

As in the reaction described above, the oxidizing gas is supplied to the iron oxide catalyst together with the regeneration liquid to separate small particles such as solid sulfur from the iron oxide catalyst.

A catalyst regenerated through the regeneration step may have a catalytic efficiency of 80% or more, as compared to a new catalyst. In consideration of the time and costs required for the catalyst regeneration step, a regenerated catalyst may be regenerated so that the regenerated catalyst has a catalytic efficiency of 80% to 90%, as compared to the new catalyst. The iron oxide catalyst may be used semipermanently through the regeneration step, thereby reducing costs.

In the present disclosure, a recovery step of recovering concentrated ammonia liquor obtained from the catalyst treatment step may be further included.

The recovery step may include a solid-liquid separation process, and for example, in the recovery step, only the concentrated ammonia liquor may be recovered through solid-liquid separation by a decanting process by a specific gravity difference or centrifugation in order to additionally remove solid sulfur particles, but the present disclosure is not limited thereto.

Hereinafter, the present disclosure will be described in more detail with reference to specific embodiments. The following embodiments are merely examples for better understanding of the present disclosure, and the scope of the present disclosure is not limited thereto.

### Mode for Invention

### Embodiment

### Example 1

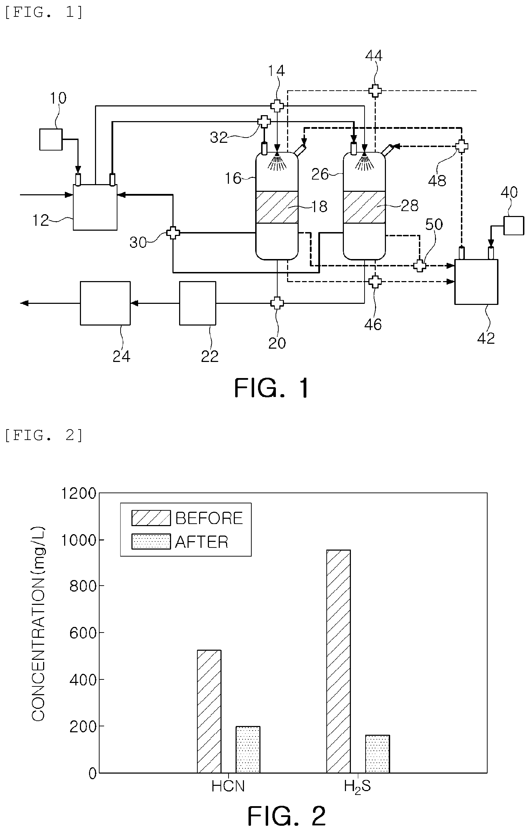

1L of concentrated ammonia liquor at room temperature (25°C) in which 953 mg/L of hydrogen sulfide (H₂S) and 524 mg/L of hydrogen cyanide (HCN) were dissolved was sprayed and injected into a reactor filled with 20g of particulate hematite (Fe₂O₃) catalyst having an average particle diameter of 4 mm. At the same time, air was circulated inside the catalytic reactor. Afterwards, the concentrated ammonia liquor that passed through the iron oxide catalyst was recovered, and the concentration of hydrogen sulfide contained in the recovered concentrated ammonia liquor was calculated by ion chromatography, and the concentration of hydrogen cyanide was analyzed by a continuous flow method, and the results thereof are illustrated in FIG. 2.

As illustrated in FIG. 2, hydrogen sulfide contained in the concentrated ammonia liquor was reduced to 160 mg/L, and hydrogen cyanide contained therein was reduced to 200 mg/L.

### Example 2

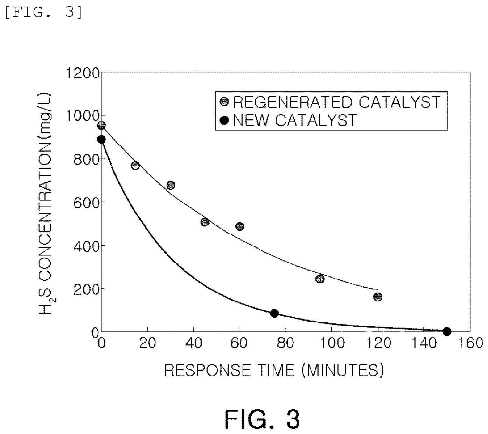

After regenerating a catalyst while using distilled water as a regeneration liquid and injecting air, in order to compare the catalytic efficiency of the regenerated catalyst and a new catalyst, the same method as that of Example 1 was performed except for using the regenerated catalyst or the new catalyst, and then, the concentration change of hydrogen sulfide contained in the concentrated ammonia liquor was measured over time and results thereof is illustrated in FIG. 3.

As illustrated in FIG. 3, when the regenerated catalyst and the new catalyst react for the same time, after 120 minutes, the concentration of hydrogen sulfide decreased from 889 mg/L to 30 mg/L for the new catalyst, and the concentration of hydrogen sulfide decreased from 953 mg/L to 160 mg/L for the regenerated catalyst. Accordingly, the efficiency of removing hydrogen sulfide from the new catalyst was measured to be about 96.6%, and the efficiency of removing the regenerated catalyst was measured to be about 83.2%. Since the regenerated catalyst shows a hydrogen sulfide removal efficiency of 86.1% as compared to the new catalyst, it was confirmed that the catalyst may be used semipermanently by regenerating the catalyst.

While exemplary embodiments have been described and described above, the scope of the present disclosure is not limited thereto. It will be apparent to those skilled in the art that modifications and variations could be made without departing from the scope of the present disclosure as defined by the appended claims.

### Description of Reference Characters

10, 40: Oxygen storage tank
12: Concentrated Ammonia Liquor Reservoir Before Treatment
14, 20: Solenoid valve for Concentrated Ammonia Liquor
16, 26: Catalytic Reactor
18, 28: Iron Oxide Catalyst
22: Solid-Liquid Separator
24: Concentrated Ammonia Liquor Reservoir After Treatment
30, 32: Solenoid Valve for Supplying Air, Oxygen, Ozone or ClO₂ Gases
42: Regeneration liquid Reservoir
44, 46: Solenoid Valve for Regeneration liquid
48, 50: Solenoid Valve for Supplying Air, Oxygen, Ozone or ClO₂ Gases

## Claims

1. A method for removing hydrogen sulfide (H₂S) and hydrogen cyanide (HCN) from concentrated ammonia liquor, the method comprising:
a catalyst treatment step of bringing concentrated ammonia liquor containing hydrogen sulfide (H₂S) and hydrogen cyanide (HCN) into contact with an iron oxide catalyst; and
a regeneration step of regenerating the iron oxide catalyst by supplying a regeneration liquid to the iron oxide catalyst.

2. The method for removing hydrogen sulfide (H₂S) and hydrogen cyanide (HCN) from concentrated ammonia liquor of claim 1, wherein the iron oxide catalyst is particulate.

3. The method for removing hydrogen sulfide (H₂S) and hydrogen cyanide (HCN) from concentrated ammonia liquor of claim 1, wherein the regeneration liquid is at least one oxidation regeneration liquid selected from the group consisting of water, ozone water, chlorine dioxide water, H₂O₂, NaOCl, NaClO₂, NaClO₃, NaClO₄, KMnO₄, and HNO₃.

4. The method for removing hydrogen sulfide (H₂S) and hydrogen cyanide (HCN) from concentrated ammonia liquor of claim 1, wherein the catalyst treatment step is performed by supplying air, oxygen, or combinations thereof together.

5. The method for removing hydrogen sulfide (H₂S) and hydrogen cyanide (HCN) from concentrated ammonia liquor of claim 1, wherein the regeneration step is performed along with at least one oxidation gas selected from the group consisting of air, oxygen, ozone, and ClO₂ gases.

6. The method for removing hydrogen sulfide (H₂S) and hydrogen cyanide (HCN) from concentrated ammonia liquor of one of claims 1 to 5, further comprising:
a recovery step of recovering the concentrated ammonia liquor obtained from the catalyst treatment step.

7. The method for removing hydrogen sulfide (H₂S) and hydrogen cyanide (HCN) from concentrated ammonia liquor of claim 6, wherein the recovery step includes a solid-liquid separation process.

## Patentansprüche

1. Ein Verfahren zum Entfernen von Schwefelwasserstoff (H₂S) und Cyanwasserstoff (HCN) aus konzentriertem Ammoniakwasser, wobei das Verfahren umfasst:
einen Katalysatorbehandlungsschritt zum Bringen von konzentriertem Ammoniakwasser, das Schwefelwasserstoff (H₂S) und Cyanwasserstoff (HCN) enthält, in einen Kontakt mit einem Eisenoxid-Katalysator, und
einen Regenerierungsschritt zum Regenerieren des Eisenoxid-Katalysators durch das Zuführen einer Regenerierungsflüssigkeit zu dem Eisenoxid-Katalysator.

2. Verfahren zum Entfernen von Schwefelwasserstoff (H₂S) und Cyanwasserstoff (HCN) aus konzentriertem Ammoniakwasser nach Anspruch 1, wobei der Eisenoxid-Katalysator partikelförmig ist.

3. Verfahren zum Entfernen von Schwefelwasserstoff (H₂S) und Cyanwasserstoff (HCN) aus konzentriertem Ammoniakwasser nach Anspruch 1, wobei die Regenerierungsflüssigkeit wenigstens eine Oxidationsregenerierungsflüssigkeit ist, die aus der Gruppe ausgewählt ist, die aus Wasser, Ozonwasser, Chlordioxidwasser, H₂O₂, NaOCl, NaClO₂, NaClO₃, NaClO₄, KMnO₄ und HNO₃ besteht.

4. Verfahren zum Entfernen von Schwefelwasserstoff (H₂S) und Cyanwasserstoff (HCN) aus konzentriertem Ammoniakwasser nach Anspruch 1, wobei der Katalysatorbehandlungsschritt durchgeführt wird, indem Luft, Sauerstoff oder Kombinationen aus diesen gemeinsam zugeführt werden.

5. Verfahren zum Entfernen von Schwefelwasserstoff (H₂S) und Cyanwasserstoff (HCN) aus konzentriertem Ammoniakwasser nach Anspruch 1, wobei der Regenerierungsschritt zusammen mit wenigstens einem Oxidationsgas durchgeführt wird, das aus der Gruppe ausgewählt ist, die aus Luft, Sauerstoff, Ozon und ClO₂-Gasen besteht.

6. Verfahren zum Entfernen von Schwefelwasserstoff (H₂S) und Cyanwasserstoff (HCN) aus konzentriertem Ammoniakwasser nach einem der Ansprüche 1 bis 5, das weiterhin umfasst:
einen Wiedergewinnungsschritt zum Wiedergewinnen des aus dem Katalysatorbehandlungsschritt erhaltenen konzentrierten Ammoniakwassers.

7. Verfahren zum Entfernen von Schwefelwasserstoff (H₂S) und Cyanwasserstoff (HCN) aus konzentriertem Ammoniakwasser nach Anspruch 6, wobei der Wiedergewinnungsschritt einen Fest-Flüssig-Trennungsprozess umfasst.

## Revendications

1. Procédé pour éliminer du sulfure d'hydrogène (H₂S) et du cyanure d'hydrogène (HCN) d'une liqueur d'ammoniac concentrée, le procédé comprenant :
une étape de traitement catalytique consistant à mettre en contact une liqueur d'ammoniac concentrée contenant du sulfure d'hydrogène (H₂S) et du cyanure d'hydrogène (HCN) avec un catalyseur à base d'oxyde de fer ; et
une étape de régénération consistant à régénérer le catalyseur à base d'oxyde de fer en fournissant un liquide de régénération au catalyseur à base d'oxyde de fer.

2. Procédé pour éliminer du sulfure d'hydrogène (H₂S) et du cyanure d'hydrogène (HCN) d'une liqueur d'ammoniac concentrée selon la revendication 1, dans lequel le catalyseur à base d'oxyde de fer est particulaire.

3. Procédé pour éliminer du sulfure d'hydrogène (H₂S) et du cyanure d'hydrogène (HCN) d'une liqueur d'ammoniac concentrée selon la revendication 1, dans lequel le liquide de régénération est au moins un liquide de régénération par oxydation choisi dans le groupe constitué par l'eau, l'eau ozonée, l'eau au dioxyde de chlore, H₂O₂, NaOCl, NaClO₂, NaClO₃, NaClO₄, KMnO₄ et HNO₃.

4. Procédé pour éliminer du sulfure d'hydrogène (H₂S) et du cyanure d'hydrogène (HCN) d'une liqueur d'ammoniac concentrée selon la revendication 1, dans lequel l'étape de traitement catalytique est réalisée en fournissant de l'air, de l'oxygène ou des combinaisons de ceux-ci ensemble.

5. Procédé pour éliminer du sulfure d'hydrogène (H₂S) et du cyanure d'hydrogène (HCN) d'une liqueur d'ammoniac concentrée selon la revendication 1, dans lequel l'étape de régénération est effectuée avec au moins un gaz d'oxydation choisi dans le groupe constitué par l'air, l'oxygène, l'ozone et les gaz à base de ClO₂.

6. Procédé pour éliminer du sulfure d'hydrogène (H₂S) et du cyanure d'hydrogène (HCN) d'une liqueur d'ammoniac concentrée selon l'une quelconque des revendications 1 à 5, comprenant en outre :
une étape de récupération consistant à récupérer la liqueur d'ammoniac concentrée obtenue à l'issue de l'étape de traitement catalytique.

7. Procédé pour éliminer du sulfure d'hydrogène (H₂S) et du cyanure d'hydrogène (HCN) d'une liqueur d'ammoniac concentrée selon la revendication 6, dans lequel l'étape de récupération comprend un processus de séparation solide-liquide.
